# EUROPÄISCHE PATENTSCHRIFT

(11) **EP 1 564 041 B1**
(45) Veröffentlichungstag und Bekanntmachung des Hinweises auf die Patenterteilung: **12.09.2007**
(21) Anmeldenummer: 05001155.0
(22) Anmeldetag: 21.01.2005
(51) Int. Cl.: B60G 21/055, B60G 3/20, B60G 7/02

(54) **Stabilisatorvorrichtung eines Fahrzeugs**
Stabiliser device of a vehicle
Dispositif stabilisateur d'un véhicule

(30) Priorität: 06.02.2004 DE 102004005811
(43) Veröffentlichungstag der Anmeldung: 17.08.2005
(73) Patentinhaber: AUDI AG, 85045 Ingolstadt (DE)
(72) Erfinder: Lux, Ulrich, 80939 München (DE); Elsässer, Harald, 85114 Buxheim (DE); Kur, Jaromir, 85051 Ingolstadt (DE); Weniger, Gordian, 85051 Ingolstadt (DE)
(74) Vertreter: Asch, Konrad

(56) Entgegenhaltungen:
- DE-A1- 2 113 422
- DE-A1- 3 730 334
- DE-A1- 4 411 285
- DE-A1- 19 721 754
- DE-C1- 4 017 210
- US-A- 3 508 763
- US-A- 5 348 334
- PATENT ABSTRACTS OF JAPAN Bd. 2000, Nr. 22, 9. März 2001 (2001-03-09) -& JP 2001 130232 A (NISSAN MOTOR CO LTD), 15. Mai 2001 (2001-05-15)

## Beschreibung

Die Erfindung betrifft eine Stabilisatorvorrichtung eines Fahrzeugs gemäß der im Oberbegriff des Anspruchs 1 angegebenen Art.

Es ist der Zweck einer Stabilisatorvorrichtung, das Fahrzeug zu stabilisieren und z. B. die Kurvenneigung des Fahrzeugs zu verringern. Dies wird dadurch erreicht, dass der Radaufhängung bei Kurvenneigung ein nach oben gerichtetes Drehmoment übertragen wird, dass der Kurvenneigung entgegenwirkt.

Eine im Kraftfahrzeugbau übliche und deshalb bekannte Stabilisatorvorrichtung der eingangs angegebenen Art weist einen winkelförmigen Stabilisator mit einem sich quer zur Fahrzeuglängsrichtung erstreckenden Stegabschnitt und einem sich in der Fahrzeugrichtung erstreckenden Hebel auf, der zum Zweck des Bewegungsausgleichs durch eine sogenannte Stabilisatorkoppel mit dem unteren vorderen Querlenkerarm des unteren Querlenkers der Radaufhängung verbunden ist und hierdurch das stabilisierende Drehmoment auf den Querlenker übertragen kann. Diese bekannte Ausgestaltung ist nicht nur vielgliedrig, wobei sie auch einen beträchtlichen Bauraum beansprucht, sondern es wird auch das Übersetzungsverhältnis Stabilisatorweg zu Rasthub verringert und damit verschlechert.

In der DE 37 30 334 C1 ist ein Stabilisator für Kraftfahrzeuge beschrieben, dessen Hebel in Richtung auf das zu verbindende Fahrzeugteil elastisch nachgiebig abgebogen und dabei zug- und drucksteif ausgebildet ist. Diese bekannte Ausgestaltung verringert die vorbeschriebenen Nachteile allenfalls bezüglich der Vielgliedrigkeit. Dafür ist die Formgebung dieser bekannten Ausgestaltung schwierig und teuer in der Herstellung.

Weiterhin offenbart das Dokument DE 4 411 285 eine Stabilisatorvorrichtung gemäß den Merkmale des Oberbegriffs des Anspruchs 1

Der Erfindung liegt die Aufgabe zugrunde, eine Stabilisatorvorrichtung gemäß der im Oberbegriff des Anspruchs 1 angegebenen Art derart weiterzubilden, dass unter Vermeidung der genannten Nachteile die Konstruktion vereinfacht und vorzugsweise auch die Stabilisatorübersetzung verbessert wird.

Diese Aufgabe wird durch die kennzeichnenden Merkmale des Anspruchs 1 in Verbindung mit seinen Oberbegriffsmerkmalen gelöst.

Die Unteransprüche bilden vorteilhafte Weiterbildungen der Erfindung.

Der Erfindung liegt die Erkenntnis zugrunde, dass die bekannte mechanische Verbindung zwischen dem Hebel und dem Querlenkerarm aufgrund der überlappten Anordnung sowohl den verhältnismässig großen Bauraum beansprucht und auch die mechanische Verbindung erschwert.

Bei der erfindungsgemäßen Stabilisatorvorrichtung ist das innere Ende des vorderen Querlenkerarms mit dem Hebel verbunden, und in diesem Verbindungsbereich ist das innere vordere Gelenk so ausbildet, dass ein Ein- und Ausschwenken des Querlenkers ein Hin- und Herschwenken des Hebels um den Stegabschnitt bewirkt.

Dabei kann das innere Ende des vorderen Querlenkers auf dem Hebel um dessen Hebelachse drehbar gelagert sein.

Es sind somit die einander zugewandten Enden des Stabilisators und des Querlenkerarms miteinander verbunden, wobei in diese Verbindung das innere vordere Gelenk integriert ist und eine kleine und kompakte Bauweise erreicht wird. Diese Gelenkverbindung ist geeignet, mit wechselseitiger Wirkung Drehmomente zwischen dem Stabilisator und dem Querlenkerarm zu übertragen. Eine überlappende Anordnung des Stabilisators und des Querlenkerarms, wie sie beim Stand der Technik vorhanden ist, entfällt.

Es wird auch die Stabilisatorübersetzung verbessert in Richtung 1:1, wobei sich eine direkte Stabilisatorübersetzung ergibt. Es wird auch die Montage bzw. Demontage vereinfacht, weil beim Montieren des Gelenks zugleich die Verbindung mit dem Stabilisator hergestellt wird.

Es wird eine besonders stabile Gelenkverbindung erreicht, wenn der Hebel eine im wesentlichen aufrechte Stellung hat, insbesondere sich nach oben erstreckt und vorzugsweise in der mittleren Höhenstellung der Radaufhängung vertikal angeordnet ist, insbesondere mit seinem freien Ende nach oben gerichtet ist. In dieser Stellung ist die Gelenkverbindung auch sehr gut geeignet, Drehmomente zu übertragen.

Da die wechselseitig wirksamen Drehmomentübertragungen zwischen dem Querlenkerarm und dem Stabilisator nicht in der Drehebene des Stabilisators liegen, eignet sich ein an sich bekanntes elastisches Gelenk, z. B. mit einem Gelenkteil aus elastischem Gummi oder Kunststoff, vorzüglich für einen Ausgleich, der die im wesentlichen vertikale Schwenkbarkeit des Querlenkerarms gewährleistet.

Um Platz für ein der Radaufhängung zugehöriges Rad oder auch eine Spurstange zu schaffen, ist es vorteilhaft, den Querlenkerarm oder wenigstens dessen Vorderseite, - in der Draufsicht gesehen - konkav zu formen, wodurch Platz vor dem Querlenkerarm geschaffen wird. Dabei kann die konkave Form eine Winkelform oder Krümmung sein.

Wenn das innere vordere Gelenk bezüglich einer das äußere vordere Gelenk enthaltenden horizontalen Ebene nach oben versetzt ist, ermöglicht dies nicht nur eine größere Bodenfreiheit für das Fahrzeug, sondern es ergibt sich auch eine günstige Hebelwirkung.

Um auch eine Materialersparnis bei hinreichender Stabilität zu erreichen, ist es vorteilhaft, wenn sich die Querschnittshöhe des vorderen Lenkerarms vom äußeren Gelenk zum inneren Gelenk vergrößert.

Ein an sich übliches Federbein einer Radaufhängung kann im Rahmen der Erfindung auf dem vorderen oder hinteren Querlenkerarm oder auf einer auf beiden Querlenkerarmen ruhenden Traverse abgestützt sein. Hierbei ist eine radnahe Anordnung des Federbeins vorteilhaft. Ein weit nach Fahrzeug vorn gewählter Drehpunkt zwischen dem Stabilisator und dem Querlenkerarm ergibt eine gute Feder-/Dämpferübersetzung, vorzugsweise von etwa 0,7 bis 0,9.

Um dabei die Abstützstelle des Federbeins einen Abstand vom äußeren zugehörigen Gelenk aufweist, der kleiner ist als die halbe Länge des zugehörigen Querlenkerarms, insbesondere ein Drittel bis ein Fünftel, vorzugsweise etwa ein Viertel, der Länge beträgt.

Es ist aus mehreren Gründen vorteilhaft, der Stabilisatorvorrichtung eine Verstellvorrichtung zum Verstellen oder Voreinstellen des am Hebel wirksamen Drehmomentes zuzuordnen. Die Verstellvorrichtung eignet sich dazu, mit einer Steuervorrichtung oder Regelvorrichtung, insbesondere in Verbindung mit einer Sensorvorrichtung, eine Fahrzeughöhenregulierung oder aktive Fahrzeugwankregelung durchzuführen.

Weitere Vorteile, Merkmale und Anwendungsmöglichkeiten der vorliegenden Erfindung ergeben sich aus der nachfolgenden Beschreibung in Verbindung mit dem in der Zeichnung dargestellten Ausführungsbeispiel.

Die Erfindung wird im Folgenden anhand des in der Zeichnung dargestellten Ausführungsbeispiels näher beschrieben. In der Beschreibung, in den Patentansprüchen, in der Zusammenfassung und in der Zeichnung werden die in der hinten angeführten Liste der Bezugszeichen verwendeten Begriffe und zugeordneten Bezugszeichen verwendet. In der Zeichnung bedeutet:
- Fig. 1: eine schematische und perspektivische Darstellung einer Stabilisatorvorrichtung eines Fahrzeugs, insbesondere eines Personen-Kraftwagens, im Zusammenwirken mit einer oder zwei einander seitlich gegenüberliegenden, insbesondere vorderen, Radaufhängungen des Fahrzeugs;
- Fig. 2: eine Draufsicht auf die Stabilisatorvorrichtung;
- Fig. 3: die Stabilisatorvorrichtung in einer eingefederten Funktionsstellung;
- Fig. 4: die Stabilisatorvorrichtung in einer ausgefederten Funktionsstellung;
- Fig. 5: die Stabilisatorvorrichtung in einer nach links ausgelenkten Funktionsstellung;
- Fig. 6: eine schematische und perspektivische Darstellung der Stabilisatorvorrichtung nach Fig. 1 in abgewandelter Ausgestaltung;
- Fig. 7: einen axialen Schnitt durch einen Antriebsmotor;
- Fig. 8: die Stabilisatorvorrichtung in weiter abgewandelter Ausgestaltung;

- Fig. 9: die Stabilisatorvorrichtung in weiter abgewandelter Ausgestaltung.

Die in ihrer Gesamtheit mit 10 bezeichnete Stabilisatorvorrichtung kann mit einer oder mit beiden seitlich einander spiegelbildlich gegenüberliegenden, jeweils in ihrer Gesamtheit mit 12 bezeichneten Radaufhängungen des Fahrzeugs zusammenwirken.

Hierbei überträgt die Stabilisatorvorrichtung 10 ein Drehmoment auf ein Radführungselement der zugehörigen Radaufhängung 12, dessen Größe in Abhängigkeit von der Größe der Wankbewegungen (Kurvenneigungen) des Fahrzeugs veränderlich ist. Das Drehmoment ist nach oben gerichtet, um der Kurvenneigung des Fahrzeugs entgegenzuwirken. Aufgrund des Vorhandenseins einer Radaufhängungsfeder erfolgt dieses Entgegenwirken elastisch.

Aus Vereinfachungsgründen ist in den Figuren nur eine der beiden Radaufhängungen 12 dargestellt, nämlich die, die bezüglich der Fahrtrichtung F bei Vorwärtsfahrt z. B. vorne links angeordnet ist. Die bezüglich der vertikalen Längsmittelebene E des Fahrzeugs der Radaufhängung 12 seitlich gegenüberliegende Radaufhängung 12 ist spiegelbildlich ausgebildet.

Zwei weitere, hier hintere, Radaufhängungen des vierrädrigen Fahrzeugs sind nicht dargestellt und können gleich oder anders ausgebildet sein.

Die Radaufhängung 12 weist einen unteren und einen oberen, jeweils in seiner Gesamtheit mit 14A, 14B bezeichneten Querlenker auf, die jeweils durch einen hinteren und einen vorderen Querlenkerarm 14Ah, 14Av, 14Bh, 14Bv gebildet sind.

Die unteren Querlenkerarme 14Ah, 14Av sind an ihren inneren Enden jeweils durch ein inneres Gelenk 16a,16b im wesentlichen vertikal schwenkbar mit der Karosserie 18 des Fahrzeugs oder einem Anbauteil der Karosserie verbunden. An ihren gegenüberliegenden äußeren Enden sind die unteren Querlenkerarme 14Ah, 14Av jeweils durch ein äußeres Gelenk 20a, 20b im wesentlichen vertikal schwenkbar mit einem Radträger 22 verbunden.

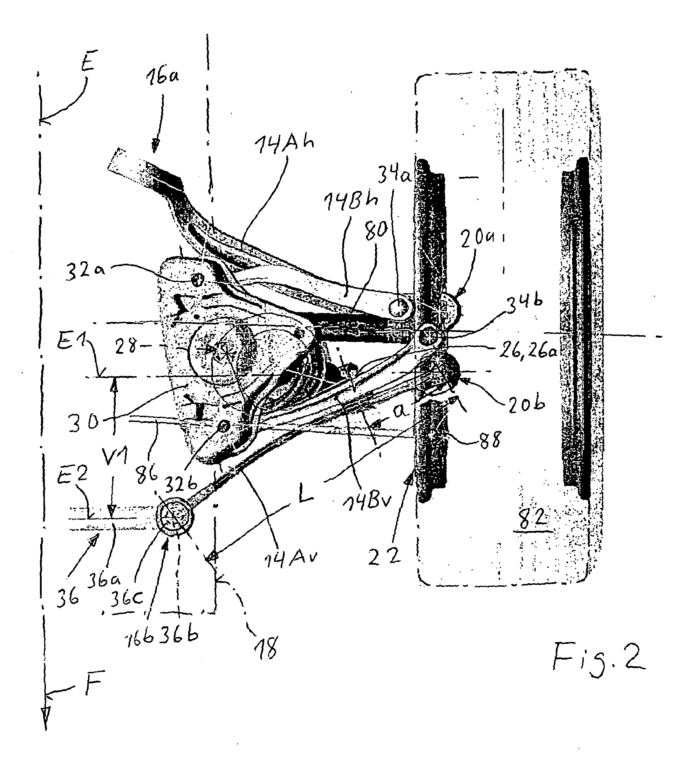

Ein zugehöriges Federbein 24 ist an seinem unteren Ende durch ein unteres Gelenk 26 am vorderen unteren Querlenkerarm 14Av abgestützt und an seinem oberen Ende durch ein oberes Gelenk 28 an einer in Fig. 2 dargestellten Traverse 30 abgestützt, auf der die Karosserie 18 gelenkig abgestützt ist. Der Abstand a des Gelenks 26 vom äußeren vorderen Gelenk 20b ist kleiner als das 0,5-fache der Länge des Querlenkerarms 14Av und beträgt vorzugsweise etwa dem 0,2 bis 0,3-fachen der Länge L.

Die oberen Querlenkerarme 14Bh, 14Bv sind an ihren inneren Enden jeweils durch ein inneres Gelenk 32a, 32b im wesentlichen vertikal schwenkbar mit der Karosserie 18 des Fahrzeugs oder einem Anbauteil der Karosserie verbunden. An ihren gegenüberliegenden äußeren Enden sind die oberen Querlenkerarme 14Bh, 14Bv jeweils durch ein äußeres Gelenk 34a, 34b im wesentlichen vertikal schwenkbar mit der Traverse 30 verbunden. Das untere und obere Gelenk 26 bzw. 28 des Federbeins 24 ist als Raum- bzw. Kugelgelenk ausgebildet.

Die inneren Gelenke 16a, 16b, 32a, 32b sind jeweils vorzugsweise durch ein bekanntes elastisches Lager, insbesondere ein Elastomerlager, gebildet, die äußeren Gelenke 20a, 20b, 34a, 34b jeweils durch ein Kugelgelenk dargestellt, wobei zueinander gehörige innere und äußere Gelenke jeweils ein gemeinsames inneres Lager und ein gemeinsames äußeres Lager jeweils mit einer angedeuteten gemeinsamen Lagerachse bilden.

Die Stabilisatorvorrichtung 10 weist einen Stabilisator 36 auf, der mit einem als Drehstab und Torsionsfeder ausgebildeten Stegabschnitt 36a und einem an seinem äußeren Ende quer abstehenden Hebel 36b winkelförmig geformt ist. Der Stegabschnitt 36a erstreckt sich etwa horizontal und quer zur vertikalen Längsmittelebene E des Fahrzeugs. Er ist bezüglich einer das untere, äußere und vordere Gelenk 20b schneidenden, vertikalen Querebene E1 nach vorne versetzt, die rechtwinklig zur Längsebene L angeordnet ist. Der Versatz V1 kann z.B. dem 0,4- bis 0,6-fachen, insbesondere etwa dem 0,5fachen, der Länge L des vorderen unteren Lenkerarms 14Av betragen. Die parallel nach vorne versetzte und das innere, vordere Gelenk 16b schneidende vertikale Querebene ist mit E2 bezeichnet.

Es ist im Rahmen der Erfindung möglich, beide einander gegenüberliegende Radaufhängungen 12 mit einem gemeinsamen quer durchgehenden und in Drehlagern 38 gelagerten Stegabschnitt 36a auszubilden. Es kann aber auch für jede Radaufhängung 12 ein eigener Stegabschnitt 36a angeordnet sein der in z. B. zwei axial versetzten Drehlagern 38 drehbar gelagert ist und an seinem dem Hebel 36b abgewandten Ende durch ein nicht dargestelltes Sicherungselement gegen ein ungewolltes Drehen gesichert ist. Es ist auch möglich, zwischen zwei Stegabschnitten 36a von zwei einander seitlich gegenüberliegenden Stabilisatoren 36 für zwei Radaufhängungen 12 eine schaltbare Kupplung (nicht dargestellt) anzuordnen, die es ermöglicht, die beiden Stegabschnitte 36a undrehbar miteinander zu verbinden oder zu lösen. Im verbundenen Zustand ist es möglich, ein vom Ein- bzw. Ausfederungszustand der einen Radaufhängung 12 abhängiges Drehmoment auf den seitlich gegenüberliegenden Stabilisator 36 zu übertragen.

Das innere, untere und vordere Gelenk 16b ist dadurch gebildet, dass der untere vordere Querlenkerarm 14Av an seinem inneren Ende durch das Gelenk 16b mit dem Hebel 36b verbunden ist, vorzugsweise um die Mittelachse des Hebels 36b schwenkbar auf dem Hebel 36b gelagert ist. Hierzu kann das Gelenk 16b als Wälzlager oder elastisches Lager, insbesondere als Elastomerlager, ausgebildet sein. Das Elastomerlager kann z. B. eine Lagerbuchse 16c am Querlenkerarm 14Av aufweisen, in der eine Hülse 16d aus elastischem Material angeordnet ist, die auf dem Hebel 36b sitzt. Zur axialen Sicherung gegen ein Abziehen des Querlenkerarms 14Bv vom Hebel 36b ist ein Sicherungselement vorgesehen, z. B. ein die Lagerbuchse 16c und/oder die Hülse 16d übergreifender Kopf 36c am freien Ende des Hebels 36b. Zur gegenüberliegenden Seite, hier nach unten, ist die Lagerbuchse 16c ebenfalls begrenzt, z. B. durch den Stegabschnitt 36a.

Das innere vordere Gelenk 16b ist bezüglich einer horizontalen, das äußere vordere Gelenk 20b schneidenden horizontalen Ebene E3 nach oben versetzt. Ein sich zwischen der Ebene E3 und der Höhenmitte des Gelenks 16b erstreckender Versatz ist mit V2 bezeichnet.

Bei dieser Ausgestaltung und Lagerung des Stabilisators 36 ist der untere vordere Querlenkerarm 14Av mittelbar über den Stabilisator 36 an der Karosserie 18 gelagert, wobei die Verbindung zwischen dem Stabilisator 36 und dem Querlenkerarm 14Av und das innere vordere und untere Gelenk 14b miteinander kombiniert sind.

Hierdurch ergibt sich eine direkte Stabilisatorübersetzung. Diese wird im Vergleich mit der bekannten Ausgestaltung in Richtung 1:1 verbessert. Eine zusätzliche Koppel zur Verbindung mit dem Querlenkerarm 14Av entfällt.

Wie insbesondere aus Fig. 2 zu entnehmen ist, vergrößert sich die Abmessung h in der Höhe des unteren vorderen Querlenkerarms 14Av wenigstens abschnittsweise in Richtung auf sein inneres Ende. Dies gilt insbesondere für seinen mittleren Längsbereich, der sich schräg aufwärts erstrecken kann. Dabei kann der Querlenkerarm 14Av einen inneren und/oder äußeren Endabschnitt aufweisen, der bzw. die sich im wesentlichen horizontal erstrecken. Der Querlenkerarm 14Av ist vorzugsweise als hochkant angeordnete flache Leiste ausgebildet. In der Draufsicht gesehen, kann der Querlenkerarm 14Av bezüglich seiner Vorderseite konkav geformt sein, insbesondere gekrümmt sein, wie es Fig. 2 zeigt. Wie aus dieser Figur ebenfalls zu entnehmen ist, kann das Gelenk 26 seitlich, insbesondere rückseitig, am Querlenkerarm 14Av angeordnet sein. Hierzu kann ein quer vom Querlenkerarm 14Av abstehender Lagerbolzen 26a dienen.

Der Hebel 36b ist vorzugsweise in der Normalstellung der Radaufhängung 12, z. B. in der mittleren Höhenstellung des unteren Querlenkerarms 14Av, nach oben gerichtet, insbesondere vertikal nach oben. Dies gilt auch für die Mittelachse der auf dem Hebel 36b sitzenden Lagerbuchse. Bei dieser Ausgestaltung ist der vertikale Versatz V2 größer, als wenn der Hebel 36b sich etwa horizontal erstrecken würde.

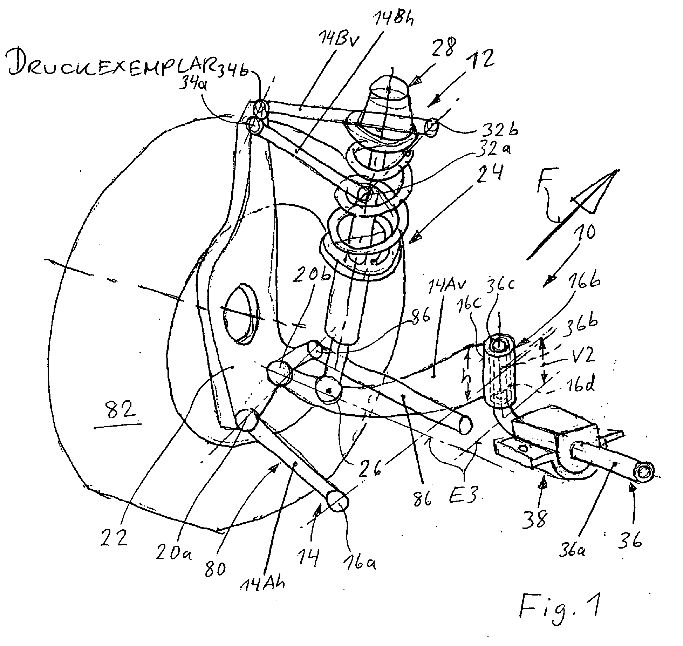

Nachfolgend wird die Funktion der Stabilisatorvorrichtung 10 gemäß dem Ausführungsbeispiel nach Fig. 1 bis 4 beschrieben.

Mit Ausnahme der mittleren Schwenkstellung des Hebels 36b üben der Stabilisator 36 und der untere vordere Querlenkerarm 14Av ein gegenseitig wirksames Drehmoment aufeinander aus.

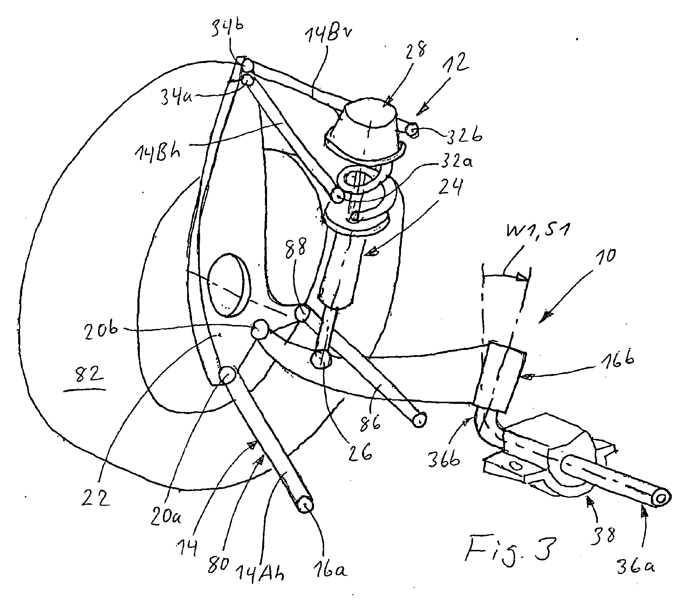

Beim Einfedern der Radaufhängung 10 gemäß Fig. 3, bei der der Querlenkerarm 14Av nach oben schwenkt, übt er ein nach vorne gerichtetes Drehmoment auf den Hebel 36b aus, so dass dieser mit einem zugehörigen Abschnitt des Stegabschnitts 36a um dessen Mittelachse um einen Winkel W1 nach vorne geschwenkt wird. Dieser Schwenkweg S1, der im wesentlichen auf einer Torsion des Stegabschnitts 26a beruht, ist im wesentlichen parallel zur Längsmittelebene E1 nach vorne gerichtet. Wenn die Biegefestigkeit des Hebels 36b nur so groß ist, dass er unter der Wirkung des vom Querlenkerarm 14Av auf ihn ausgeübten Drehmoments etwas elastisch verbogen wird, dann kann der Schwenkweg S1 aufgrund einer nach innen gerichteten Biegekomponente im wesentlichen schräg nach vorne und innen gerichtet sein.

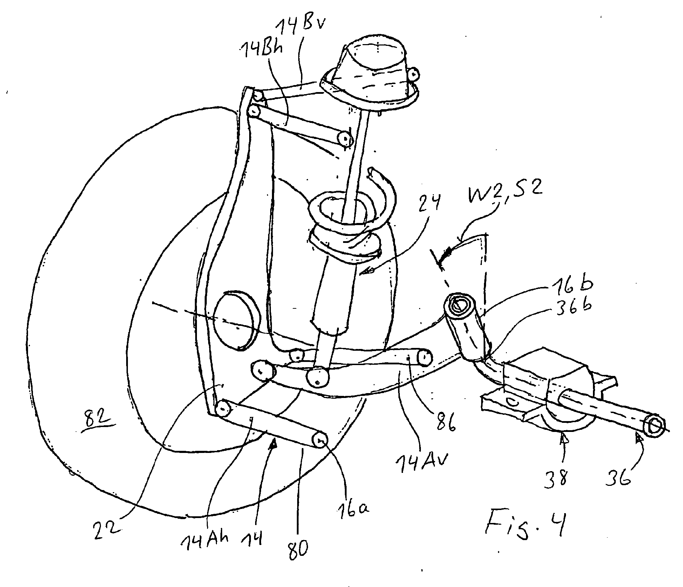

Beim Ausfedern der Radaufhängung 10 gemäß Fig. 4, bei der der Querlenkerarm 14Av nach unten schwenkt, übt er ein nach hinten gerichtetes Drehmoment auf den Hebel 36b aus, so dass dieser mit einem zugehörigen Abschnitt des Stegabschnitts 36a um dessen Mittelachse um einen Winkel W2 nach hinten geschwenkt wird. Dieser Schwenkweg S2, der im wesentlichen auf einer Torsion des Stegabschnitts 26a beruht, ist im wesentlichen parallel zur Längsmittelebene E nach hinten gerichtet. Wenn die Biegefestigkeit des Hebels 36b nur so groß ist, dass er unter der Wirkung des vom Querlenkerarm 14Av auf ihn ausgeübten Drehmoments etwas elastisch verbogen wird, dann kann der Schwenkweg S2 aufgrund einer nach außen gerichteten Biegekomponente im wesentlichen etwas schräg nach hinten und außen gerichtet sein.

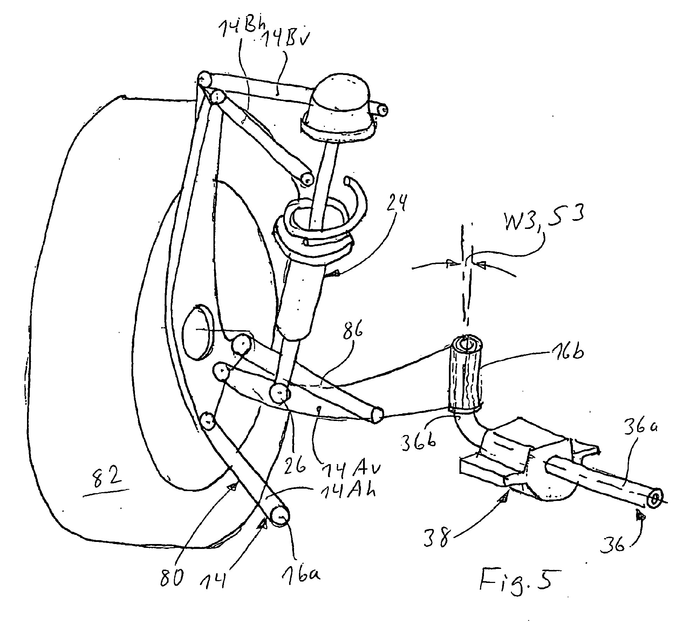

Beim Lenken gemäß Fig. 5 übt der untere vordere Querlenkerarm 14Av auf den Stegabschnitt 36a des Stabilisators 36 ein Drehmoment aus, das den Hebel 36b nach hinten dreht, s. den Drehwinkel W3 und Drehweg S3, wobei diese Funktion und Bewegung des Hebels 36b prinzipiell der bzw. den Bewegungsrichtungen beim Ausschwenken gemäß Fig. 4 entsprechen kann.

Es ist eine Verstellvorrichtung 40 so mit dem Stabilisator 36 verbunden, dass das zwischen ihm und dem Querlenker ausübbare Drehmoment vergößerbar oder verringerbar und somit einstellbar ist. Hierdurch lässt sich auch die Normalstellung bzw. Ausgangsstellung des Stabilisators 36 und Hebels 36b verstellen und einstellen.

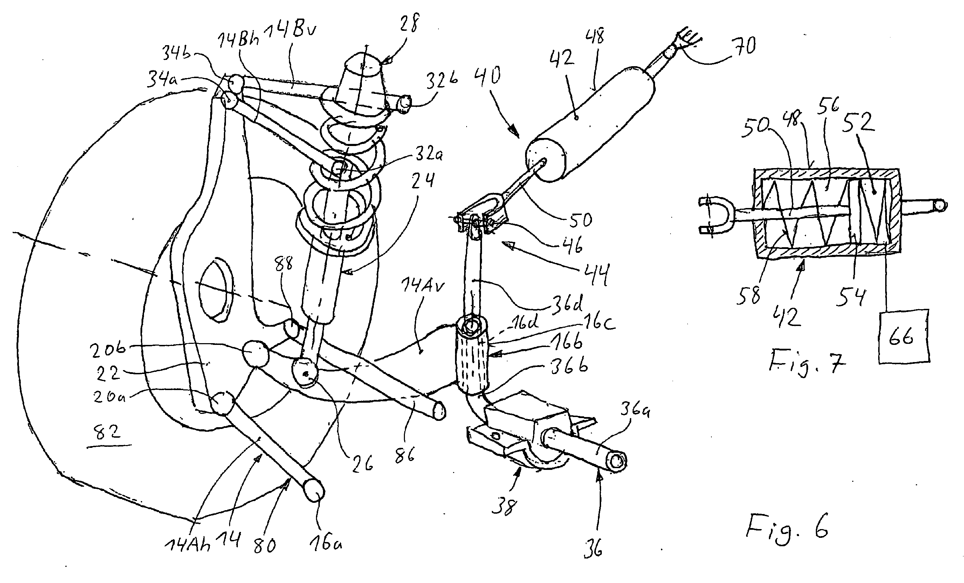

Die Verstellvorrichtung 40 weist gemäß Fig. 6 einen wahlweise ansteuerbaren Antriebsmotor 42 auf, der durch ein Verbindungsgestänge 44 mit dem Stabilisator 36, insbesondere mit dem Hebel 36b, verbunden ist. Die Verstellvorrichtung 40 kann manuell oder durch eine Steuer- oder Regeleinrichtung 66 automatisch verstellbar und einstellbar sein.

Bei den Ausführungsbeispielen nach Fig. 6 und 8 ist der Verstellmotor 42 mit einem das Gelenk 16b überragenden Längsabschnitt 36d des Hebels 36b verbunden, insbesondere durch ein Gelenk 46.

Beim Ausführungsbeispiel nach Fig. 6 ist Antriebsmotor 42 durch einen pneumatischen oder hydraulischen Kolbenzylinder 48 gebildet, dessen Kolbenstange 50 durch das Gelenk 46 mit dem Längsabschnitt 36d verbunden ist. Der Kolbenzylinder 48 weist eine Druckkammer 52 auf, die mit unterschiedlichem Fluiddruck beaufschlagbar ist. In einer auf der anderen Seite eines Kolbens 54 angeordneten Kammer 56 kann eine Rückstellfeder 58 für den Kolben 54 angeordnet sein, die bei einem solchen Ausführungsbeispiel die Rück-Verstellbewegung erzeugt.

Beim Ausführungsbeispielen nach Fig. 8 ist der Antriebsmotor 42 ein in beide Drehrichtungen antreibbarer, insbesondere elektrischer, Verstellmotor 42, dessen Drehwelle 60 durch ein die Drehbewegung in eine im wesentlichen geradlinige Bewegung umwandelndes Getriebe 62, z. B. ein Drehgelenk oder Kniehebel mit einem auf der Drehwelle 60 befestigten Hebelarm 62a und eine damit durch ein Kniegelenk 62b verbundenen Schub- und Zugarm 62c, mit dem Längsabschnitt 36d verbunden ist.

Die Drehwelle 60 kann durch eine Torsionsstabfeder gebildet sein.

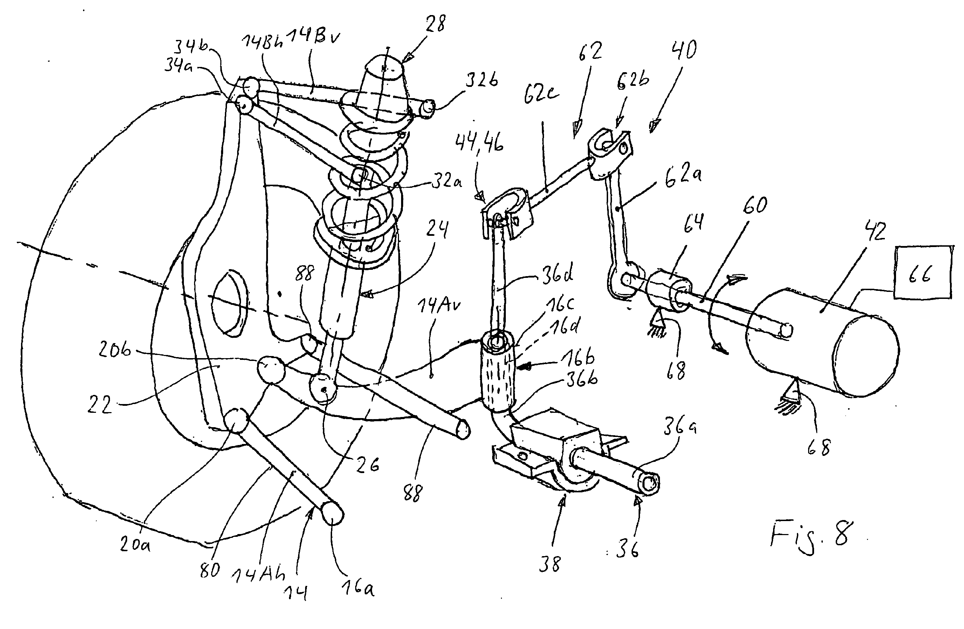

Bei den Ausführungsbeispielen nach Fig. 6 und 8 ist die Verstellvorrichtung 40 raumgünstig vor der Radaufhängung 12 angeordnet. Der Antriebsmotor 42 und z. B. auch ein Drehlager 64 für die Drehwelle 60 sind durch andeutungsweise dargestellte Festlager 68 (Fig. 7) oder Schwenklager 70 (Fig. 6) mittelbar oder unmittelbar an der Karosserie 18 gelagert.

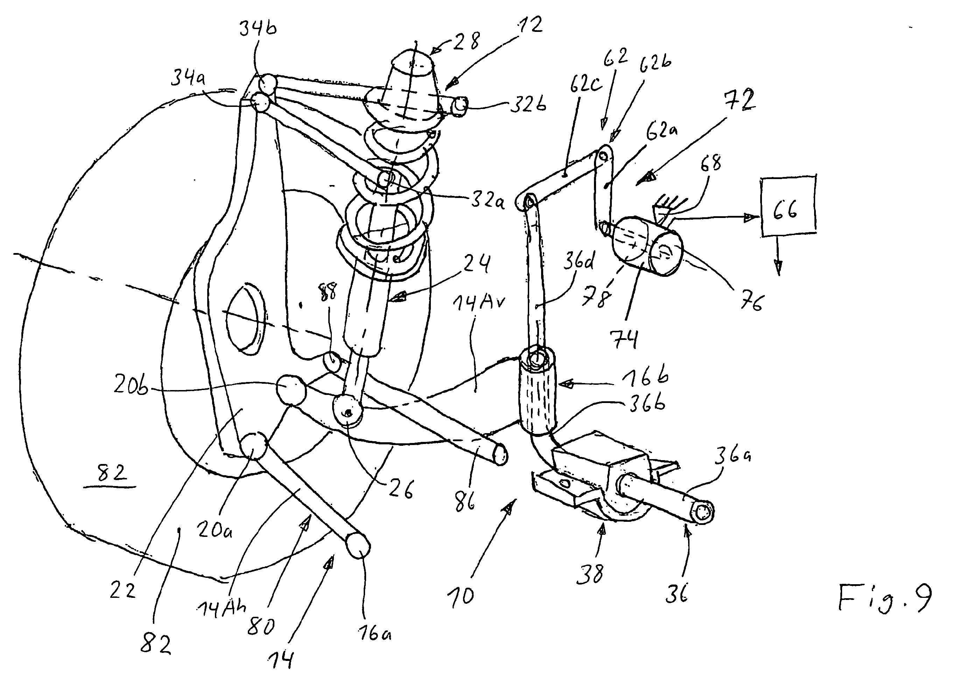

Beim Ausführungsbeispiel nach Fig. 9, bei dem gleiche oder vergleichbare Teile mit gleichen Bezugszahlen versehen sind, ist der Radaufhängung 12 oder dem Stabilisator 36 oder Anbauteilen davon eine Sensorvorrichtung 72 mit einem Sensor 74 zugeordnet, zum Ermitteln einer Höhenstellung, insbesondere der mittleren Höhenstellung, des unteren Querlenkers 14, insbesondere seines vorderen Querlenkerarms 14Av. Der Sensor 74 erzeugt in der von der gewünschten Höhenstellung bewegungsabhängigen Bewegungsstellung des sensierten Bauteils wenigstens ein Signal, das als Steuer- oder Regelwert für die z. B. als Fahrzeughöhen-Steuervorrichtung oder -Regelvorrichtung oder als Fahrzeugwank-Steuervorrichtung oder -Regelvorrichtung ausgebildeten Steuereinrichtung 66 benutzt werden kann.

Bei dem Sensor 74 kann es sich um einen Bewegungsmelder oder -messer handeln, insbesondere um einen solchen, in dem ein Bauteil in Abhängigkeit von der zu ermittelnden Bewegung bewegbar ist. Beim Ausführungsbeispiel ist in einem Sensorgehäuse 76 eine Drehwelle 78 drehbar gelagert, die bewegungsmäßig mit dem Hebel 36b verbunden ist. Hierzu kann ein Mechanismus dienen, der eine im wesentlichen gerade Bewegung in eine Drehbewegung umwandelt, wie er z. B. beim Ausführungsbeispiel nach Fig. 8 als Kniehebel beschrieben worden ist.

Der Verstellvorrichtung 40 und/oder der Sensorvorrichtung 72 kann ein nicht dargestellter Spritzschutz vorgeordnet sein, der an der Karosserie 18 oder Anbauteilen derselben befestigt ist.

Die Stabilisatorvorrichtung 10 eignet sich vorteilhaft für eine vorbeschriebene Vier-Lenker-Vorderradachse 80, deren Räder 82 z. B. angetrieben sein können. In Fig. 2 ist ein sich zum Rad 82 erstreckender Antriebswellenabschnitt dargestellt und mit 84 bezeichnet. Eine Spurstange 86 ist durch ein Gelenk 88 vorzugsweise mit der Vorderseite des Radträgers 22 verbunden. Die Spurstange 86 erstreckt sich über den Querlenker 14Av.

### BEZUGSZEICHENLISTE

- 10: Stabilisatorvorrichtung
- 12: Radaufhängung
- 14: Querlenker
- 14A: unterer Querlenker
- 14Ah: unterer hinterer Querlenkerarm
- 14Av: unterer vorderer Querlenkerarm
- 14B: oberer Querlenker
- 14Bh: oberer hinterer Querlenkerarm
- 14Bv: oberer vorderer Querlenkerarm
- 16a: inneres Gelenk
- 16b: inneres Gelenk
- 16c: Lagerbuchse
- 16d: Hülse
- 18: Karosserie
- 20a: äußeres Gelenk
- 20b: äußeres Gelenk
- 22: Radträger
- 24: Federbein
- 26: unteres Gelenk
- 26a: Lagerbolzen
- 28: oberes Gelenk
- 30: Traverse
- 32a: inneres Gelenk
- 32b: inneres Gelenk
- 34a: äußeres Gelenk
- 34b: äußeres Gelenk
- 36: Stabilisator
- 36a: Stegabschnitt
- 36b: Hebel
- 36c: Kopf
- 36d: Längsabschnitt
- 38: Steuer- oder Regeleinrichtung
- 40: Verstellvorrichtung
- 42: Antriebsmotor
- 44: Verbindungsgestänge
- 46: Gelenk
- 48: Kolbenzylinder
- 50: Kolbenstange
- 52: Druckkammer
- 54: Kolben
- 56: Kammer
- 58: Rückstellfeder
- 60: Drehwelle
- 62: Getriebe
- 62a: Hebelarm
- 62b: Kniegelenk
- 62c: Schub- und Zugarm
- 64: Drehlager
- 66: Steuer- oder Regeleinrichtung
- 68: Festlager
- 70: Schwenklager
- 72: Sensorvorrichtung
- 74: Sensor
- 76: Sensorgehäuse
- 78: Drehwelle
- 80: Vorderradachse
- 82: Rad
- 84: Antriebwellenabschnitt
- 86: Spurstange
- 88: Gelenk
- a: Abstand
- h: Höhe
- E: vertikale Längsebene
- E1: vertikale Querebene
- E2: vertikale Querebene
- E3: horizontale Ebene
- F: Fahrtrichtung nach vorne
- R: Bewegungsrichtung
- S1: Schwenkweg
- S2: Schwenkweg
- S3: Schwenkweg
- V1: Versatz
- V2: Versatz
- W1: Winkel
- W2: Winkel
- W3: Winkel

## Patentansprüche

1. Stabilisatorvorrichtung (10) eines Fahrzeugs im Zusammenwirken mit einer Radaufhängung (12), mit einem Querlenker (14), der einen hinteren und einen vorderen Querlenkerarm (14Ah, 14Av) aufweist, die an ihren inneren Enden durch innere Gelenke (16a, 16b, 32a, 32b) auf und ab schwenkbar mit einer Karosserie (18) und an ihren äußeren Enden durch äußere Gelenke (20a, 20b, 34a, 34b) auf und ab schwenkbar mit einem Radträger (22) verbunden sind, wobei das vordere innere Gelenk (16b) bezüglich einer das äußere vordere Gelenk (20b) enthaltenen zur vertikalen Längsebene (E) des Fahrzeugs querverlaufenden, vertikalen Querebene (E1) nach vorne versetzt ist, wobei ein Stabilisator (36) vorgesehen ist, der mit einem eine Torsionsfeder bildenden, sich quer zum Fahrzeug erstreckenden Stegabschnitt (36a) und einem davon quer abstehenden Hebel (36b) winkelförmig geformt ist, und wobei der Stegabschnitt (36a) bezüglich der vertikalen Querebene (E1) nach vorne versetzt ist, **dadurch gekennzeichnet, dass** das innere vordere Ende des Querlenkerarms (14Av) mit dem Hebel (36b) verbunden ist und in diesem Verbindungsbereich das innere vordere Gelenk (16b) bildet, wobei das Gelenk (16b) so ausgebildet ist, dass ein Ein- und Ausschwenken des Querlenkers (14B) ein Hin- und Herschwenken des Hebels (36b) um den Stegabschnitt (36a) bewirkt.

2. Stabilisatorvorrichtung nach Anspruch 1, **dadurch gekennzeichnet, dass** der Hebel (36b) sich in der mittleren Höhenstellung der Radaufhängung (12) im wesentlichen vertikal erstreckt, vorzugsweise vertikal nach oben erstreckt.

3. Stabilisatorvorrichtung nach Anspruch 1 oder 2, **dadurch gekennzeichnet, dass** das innere vordere Gelenk (16b) und vorzugsweise auch die übrigen Gelenke an den Enden der Querlenkerarme (14ah, 14Av, 14Bh, 14Bv) jeweils durch ein elastisches Gelenk gebildet ist bzw. sind.

4. Stabilisatorvorrichtung nach einem der vorhergehenden Ansprüche, **dadurch gekennzeichnet, dass** - in der Draufsicht gesehen - wenigsten die Vorderseite des vorderen unteren Querlenkerarms (14Av), vorzugsweise der Querlenkerarm (14Av) insgesamt, konkav geformt ist.

5. Stabilisatorvorrichtung nach Anspruch 4, **dadurch gekennzeichnet, dass** die Vorderseite oder der Querlenkerarm (14Av) gekrümmt ist.

6. Stabilisatorvorrichtung nach einem der vorhergehenden Ansprüche, **dadurch gekennzeichnet, dass** das innere vordere Gelenk (16b) bezüglich einer das äußere vordere Gelenk (20b) enthaltenden horizontalen Ebene (E3) um einen Versatz (V2) nach oben versetzt ist.

7. Stabilisatorvorrichtung nach einem der vorhergehenden Ansprüche, **dadurch gekennzeichnet, dass** die Querschnittshöhe (h) des vorderen Querlenkerarms (14Av) sich vom äußeren Gelenk (20b) zum inneren Gelenk (16b) vergrößert und vorzugsweise der Querlenkerarm (14Av) durch eine flache und hochkant angeordnete Leiste gebildet ist.

8. Stabilisatorvorrichtung nach einem der vorhergehenden Ansprüche, **dadurch gekennzeichnet, dass** ein Federbein (24) der Radaufhängung am vorderen oder hinteren Querlenkerarm (14Ah, 14Av) abgestützt ist.

9. Stabilisatorvorrichtung nach Anspruch 8, **dadurch gekennzeichnet, dass** die Abstützstelle des Federbeins (24) einen Abstand vom äußeren zugehörigen Gelenk aufweist, der kleiner ist als die halbe Länge (L) des zugehörigen Querlenkerarms (14Av), insbesondere ein Drittel bis ein Fünftel, vorzugsweise etwa ein Viertel, der Länge (L) beträgt.

10. Stabilisatorvorrichtung, nach einem der vorhergehenden Ansprüche, **dadurch gekennzeichnet, dass** ihr eine Verstellvorrichtung (40) zum Verstellen oder Voreinstellen des am Hebel (36b) wirksamen Drehmomentes zugeordnet ist

11. Stabilisatorvorrichtung, nach Anspruch 10, **dadurch gekennzeichnet, dass** die Verstellvorrichtung (40) einen Antriebsmotor (42) aufweist, der durch eine Steuer- oder Regeleinrichtung (38) ansteuerbar ist, vorzugsweise zur Steuerung oder Regelung der Fahrzeugbodenhöhe oder einer Wankstabilisierung.

12. Stabilisatorvorrichtung, nach einem der vorhergehenden Ansprüche, **dadurch gekennzeichnet, dass** ihr eine Sensorvorrichtung (72) mit einem Sensor (74) zugeordnet ist zum Ermitteln einer bestimmten Höhenstellung.der Radaufhängung (12) oder eines damit abhängig bewegten Bauteils.

## Claims

1. Vehicle stabilizer device (10) cooperating with a wheel suspension (12), with a transverse link (14) which has rear and front control arms (14Ah, 14Av) connected pivotably up and down at their inner ends to a vehicle body (18) by inner joints (16a, 16b, 32a, 32b) and connected pivotably up and down at their outer ends to a hub carrier (22) by outer joints (20a, 20b, 34a, 34b), wherein the front inner joint (16b) is offset forwards with respect to a vertical transverse plane (E1) contain[ing] the outer front joint (20b) [and] extending at right-angles to the vertical longitudinal plane (E) of the vehicle, wherein a stabilizer (36) is provided which is cranked, with a stem portion (36a) forming a torsion spring extending transversely with respect to the vehicle and a lever (36b) sticking up therefrom at right-angles, and wherein the stem portion (36a) is offset forwards with respect to the vertical transverse plane (E1), **characterized in that** the inner front end of the control arm (14Av) is connected to the lever (36b) and forms the inner front joint (16b) in this linkage zone, the joint (16b) being configured so that pivoting in and out of the control arm (14B) causes the lever (36b) to pivot to and fro about the stem portion (36a).

2. Stabilizer device according to Claim 1, **characterized in that** in the central vertical position of the wheel suspension (12), the lever (36b) extends substantially vertically, preferably vertically upwards.

3. Stabilizer device according to Claim 1 or Claim 2, **characterized in that** the inner front joint (16b) - and preferably also each of the remaining joints at the ends of the control arms (14Ah, 14Av, 14Bh, 14Bv) - is formed by a resilient joint.

4. Stabilizer device according to any one of the preceding claims, **characterized in that** - viewed from above - at least the front side of the front lower control arm (14Av), and preferably the entire control arm (14Av), is concave-shaped.

5. Stabilizer device according to Claim 4, **characterized in that** the front side or the control arm (14Av) is curved.

6. Stabilizer device according to any one of the preceding claims, **characterized in that** the inner front joint (16b) is offset upwards by an offset (V2) with respect to a horizontal plane (E3) containing the outer front joint (20b).

7. Stabilizer device according to any one of the preceding claims, **characterized in that** the cross-sectional height (h) of the front control arm (14Av) increases from the outer joint (20b) towards the inner joint (16b), and the control arm (14Av) is preferably formed as a flat bar stood on edge.

8. Stabilizer device according to any one of the preceding claims, **characterized in that** a telescopic leg (24) of the wheel suspension is supported on the front or rear control arm (14Ah, 14Av).

9. Stabilizer device according to Claim 8, **characterized in that** the point of support of the telescopic leg (24) is located at a distance from the respective outer joint that is less than half the length (L) of the respective control arm (14Av), in particular one third to one fifth, and preferably about one quarter, of the length (L).

10. Stabilizer device according to any one of the preceding claims, **characterized in that** a setting device (40) for adjusting or presetting the torque acting on the lever (36b) is assigned to the stabilizer device.

11. Stabilizer device according to Claim 10, **characterized in that** the setting device (40) has a drive motor (42) which is controllable by a control or regulating device (38), preferably for controlling or regulating the vehicle's floor level, or for stabilizing roll.

12. Stabilizer device according to any one of the preceding claims, **characterized in that** a sensor device (72) with a sensor (74) is assigned to the stabilizer device, to detect a specified vertical position of the wheel suspension (12) or of a related moving component.

## Revendications

1. Dispositif stabilisateur (10) d'un véhicule en interaction avec une suspension de roue (12), avec une barre de liaison transversale (14) qui présente un bras oscillant transversal avant et un arrière (14Ah, 14Av) dont les extrémités intérieures sont raccordées, dans un mouvement montant et descendant, par l'intermédiaire d'articulations intérieures (16a, 16b, 32a, 32b) à une carrosserie (18) et dont les extrémités extérieures sont raccordées, dans un mouvement montant et descendant, par l'intermédiaire d'articulations extérieures (20a, 20b, 34a, 34b) à un support de roue (22), l'articulation intérieure avant (16b) étant déplacée vers l'avant par rapport à un plan transversal vertical (E1) contenant l'articulation extérieure avant (20b) et s'étendant transversalement par rapport au plan longitudinal vertical (E) du véhicule, un stabilisateur (36) étant prévu et développé sous une forme angulaire avec un tronçon de nervure (36a), formant un ressort à torsion et s'étendant transversalement par rapport au véhicule, et avec un levier (36b) en saillie transversalement, et le tronçon de nervure (36a) étant décalé vers l'avant par rapport au plan transversal vertical (E1), **caractérisé en ce que** l'extrémité intérieure avant du bras oscillant transversal (14Av) est raccordé au levier (36b) et forme dans cette zone de raccordement l'articulation intérieure avant (16b), l'articulation (16b) étant développée de sorte qu'une entrée et une sortie de la barre de liaison transversale (14B) génère une mouvement de pivotement du levier (36b) autour du tronçon de nervure (36a).

2. Dispositif stabilisateur selon la revendication 1, **caractérisé en ce que** le levier (36b) s'étend principalement verticalement dans la position en hauteur moyenne de la suspension de roue (12), de préférence il s'étend verticalement vers le haut.

3. Dispositif stabilisateur selon la revendication 1 ou 2, **caractérisé en ce que** l'articulation intérieure avant (16b) et de préférence les autres articulations également est / sont respectivement formée (s) sur les extrémités des bras oscillants transversaux (14ah, 14Av, 14Bh, 14Bv) par une articulation élastique.

4. Dispositif stabilisateur selon l'une des précédentes revendications, **caractérisé en ce que** - vu en coupe de dessus - au moins le côté avant du bras oscillant inférieur avant (14Av), de préférence la totalité de la barre de liaison transversale (14Av), est développé (e) sous une forme concave.

5. Dispositif stabilisateur selon la revendication 4, **caractérisé en ce que** le côté avant ou le bras oscillant transversal (14Av) est courbé.

6. Dispositif stabilisateur selon l'une des précédentes revendications, **caractérisé en ce que** l'articulation intérieure avant (16b) est décalée vers le haut par rapport à un plan horizontal (E3) contenant l'articulation extérieure avant (20b) autour d'un déport (V2).

7. Dispositif stabilisateur selon l'une des précédentes revendications, **caractérisé en ce que** la hauteur de la coupe transversale (h) du bras oscillant transversal avant (14Av) augmente à partir de l'articulation extérieure (20b) jusqu'à l'articulation intérieure (16b) et que de préférence le bras oscillant transversal (14Av) est formé par une nervure plate disposée de chant.

8. Dispositif stabilisateur selon l'une des précédentes revendications, **caractérisé en ce qu'**une jambe de suspension (24) de la suspension de roue est appuyée sur le bras oscillant transversal avant ou arrière (14Ah, 14Av).

9. Dispositif stabilisateur selon la revendication 8, **caractérisé en ce que** le point d'appui de la jambe de suspension (24) présente un écart de l'articulation extérieure correspondante qui est plus petit que la demi-longueur (L) du bras oscillant transversal correspondant (14Av) et s'élève en particulier de un tiers à un cinquième, de préférence environ un quart, de la longueur (L).

10. Dispositif stabilisateur selon l'une des précédentes revendications, **caractérisé en ce qu'**un dispositif de réglage (40) servant à régler ou prérégler le couple actif sur le levier (36b) lui est affecté.

11. Dispositif stabilisateur selon la revendication 10, **caractérisé en ce que** le dispositif de réglage (40) présente un moteur d'entraînement (42) qui est commandable par un dispositif de commande ou de réglage (38), de préférence pour la commande ou le réglage de la hauteur de plancher du véhicule ou de la stabilisation du roulis.

12. Dispositif stabilisateur selon l'une des précédentes revendications, **caractérisé en ce qu'**un dispositif de détection (72) avec un capteur (74) lui est affecté afin de déterminer une certaine position en hauteur de la suspension de roue (12) ou d'une pièce de construction ayant un mouvement associé.
